# EUROPÄISCHE PATENTSCHRIFT

(11) **EP 3 863 163 B1**
(45) Veröffentlichungstag und Bekanntmachung des Hinweises auf die Patenterteilung: **29.03.2023**
(21) Anmeldenummer: 20155884.8
(22) Anmeldetag: 06.02.2020
(51) Int. Cl.: H02K 15/095, H02K 21/22, H02K 15/02, H02K 3/52, H02K 1/14, H02K 7/18

(54) **STATORSEGMENT**
STATOR SEGMENT
SEGMENT DE STATOR

(43) Veröffentlichungstag der Anmeldung: 11.08.2021
(73) Patentinhaber: Flender GmbH, 46395 Bocholt (DE)
(72) Erfinder: Brenner, Robin, 94148 Kirchham (DE); Deutsch, Artur, 94086 Bad Griesbach i. Rottal (DE); Schönbauer, Norbert, 94072 Bad Füssing (DE); Weger, Michael, 94149 Kößlarn (DE)
(74) Vertreter: Michalski Hüttermann & Partner Patentanwälte mbB

(56) Entgegenhaltungen:
- EP-A1- 3 104 499
- EP-A1- 3 352 334
- EP-A1- 3 547 501

## Beschreibung

Die Erfindung betrifft ein Statorsegment, einen Stator und einen Generator, insbesondere einer Windkraftanlage.

Aus der DE 10 2005 029 895 A1 ist ein Direktantrieb für Großantriebe bekannt, der aus mehreren Segmenten aufgebaut ist, die pro Segment eine abgeschlossene Wicklungsanordnung aufweisen.

Aus der EP 0 718 955 A2 ist ein Stator einer hochpoligen mehrphasigen elektrischen Maschine bekannt, wobei der Stator mehrere Segmente unterteilt ist und sich auf jedem Segment eine mehrphasige Wicklung befindet.

Aus der EP 3 352 334 A1 ist eine Tragstruktur eines Blechpaketes eines Statorsegments einer dynamoelektrischen Maschine bekannt.

Bei segmentierten elektrischen Maschinen, insbesondere Motoren oder Generatoren im höheren Leistungsbereich über 1 MW besteht die Möglichkeit das Eisenpaket des Stators so aufzuteilen, dass an den nutparallelen Begrenzungsseiten halbe Nuten bzw. offene Nuten vorhanden sind. Erst durch die Montage der einzelnen Segmente wird eine vollständige Nut erzeugt. Dies wird beispielsweise bei großen Zahnspulen oder Formspulen umgesetzt. Problematisch ist dabei die Fixierung der au-βenliegenden Spulenseite in den halben Nuten bzw. offenen Nuten, insbesondere während des Fertigungsprozesses und Montageprozesses, um während und nach der Imprägnierung den Spulenschenkel in seiner Position an der Nutwandung zu fixieren.

Aus der EP 3 547 501 A1 ist eine Fixierung mit Kabelbindern bekannt, dabei kann wegen des Verschlusselements des Kabelbinders, das Kugelverschluss ausgebildet ist, dieser nicht vollständig gespannt werden, so dass die Spulenseite der offenen Nut nicht an der Nutwandung anliegt.

Ausgehend davon liegt der Erfindung die Aufgabe zugrunde bei dementsprechend gestalteten Statorsegmenten eine positionsgenaue Fixierung der äußeren Spulenseite in der offenen Nut von Zahnspulen oder Formspulen zu schaffen, die eine direkte Anlage am jeweiligen Zahn bzw. der Nutwandung der offenen Nut gewährleistet und somit vor allem während des Fertigungs- und Montageprozesses fixierbar sind.

Die Lösung der gestellten Aufgabe gelingt durch ein Statorsegment eines Stators einer dynamoelektrischen Maschine mit
- axial hintereinander angeordneten genuteten Blechen, so dass im Wesentlichen axial verlaufende Nuten eines Blechpakets gebildet sind,
- in den Nuten angeordnete Spulen, wobei in einer Nut eine Spulenseite oder zwei Spulenseiten unterschiedlicher Spulen angeordnet sind,
- wobei die Bleche an ihren nutparallelen äußeren Begrenzungsseiten zumindest eine offene Nut aufweisen,
- wobei die Spulenseiten in den offenen Nuten durch amagnetische Befestigungsmittel fixiert sind.
- wobei nach einer vorgebbaren Anzahl von Blechen in axialer Richtung Abstandshalter in einer Spalte vorgesehen sind, so dass in axialer Richtung betrachtet zwei oder mehrere Teilblechpakete des Statorsegments vorhanden sind,
- wobei das Blechpaket auf einer Tragstruktur angeordnet ist, die Druckplatten, Verbindungselemente und Versteifungselemente aufweist,
- wobei das amagnetische Befestigungsmittel als Spulenklammer ausgebildet ist, deren eines Ende an einer ersten Fixationsstelle, insbesondere einem Abstandshalter und deren anderes Ende an einer zweiten Fixationsstelle an der Tragstruktur, insbesondere an dem Verbindungselement unter Vorspannung befestigbar ist.

Die Lösung der gestellten Aufgabe gelingt auch durch einen Stator mit erfindungsgemäßen Statorsegmenten, wobei die sich einander zugewandten offenen Nuten über Befestigungsmittel an den Jochrücken der Statorsegmente aneinander befestigbar sind.

Die Lösung der gestellten Aufgabe gelingt auch durch eine dynamoelektrische Maschine, insbesondere einen Generator einer Windkraftanlage, mit einem erfindungsgemäßen Stator wobei ein Kühlsystem, insbesondere ein Lüfter vorgesehen ist, durch das in die vorhandenen Spalte zwischen den Teilblechpaketen Kühlluft förderbar ist.

Erfindungsgemäß erfolgt die Fixierung des außenliegenden Spulenschenkels bzw. außen liegenden Spulenseiten am Ende des Statorsegments durch nicht-magnetische Befestigungsmittel, die als Spulenklammer ausgebildet sind, wobei mindestens an einem Ende ein Haken und am anderen Ende vorzugsweise eine Schlaufe vorgesehen ist. Die erste und die zweite Fixationsstelle sind dabei so gewählt, dass eine ausreichende Kraft durch die Vorspannung der Spulenklammer erzielt wird, sodass über den axialen Verlauf der äußeren Spulenseite ein stetiger Kontakt dieser Spulenseite an der Nutwandung vorhanden ist. Durch mehrere über die axiale Länge der äußeren Spulenseite in den jeweiligen Spalten angeordnete Spulenklammern kann diese Vorgabe unterstützt werden.

Die Spulenklammer ist als amagnetisches Band oder amagnetischer Draht ausgeführt, deren Enden sich im montierten Zustand bzw. Endzustand nicht berühren, also im montierten Zustand eine offene Schlaufe bilden. Dadurch kann im Vergleich zu einem Kabelbinder eine Vorspannung in der Spulenklammer generiert, aufgebaut und gehalten werden.

Durch diese nicht-magnetische Befestigungsmittel werden Aufheizungen durch Wirbelströme im Betrieb der dynamoelektrischen Maschine, also z.B. des Windkraftgenerators vermieden. Des Weiteren wird durch die Fixierung der außenliegenden Spulenschenkel, insbesondere während des Fertigungsprozesses, hier vor allem des Imprägnierungsprozesses, aber auch während des Montageprozesses gewährleistet, dass sich der Spulenschenkel nicht von dem, eine offene Nut bildenden Zahn entfernt und somit weitere Fertigungsschritte oder die Montage des Stators beeinträchtigt.

Außerdem ist es vorteilhaft, dass diese nicht-magnetischen Befestigungsmittel, insbesondere Spulenklammern eine dauerhaft starke Fixierung der Spulenschenkel an den außenliegenden Zähnen gewährleisten, was eine im Fertigungsprozess schnelle und unproblematische Fixierung durch kostengünstige Standardteile gewährleistet und auch für längere Lagerzeiten derartiger Stator-Segmente von Vorteil ist.

Zwischen Teilblechpaketen des Blechpakets des Statorsegments sind Abstandshalter vorgesehen, die zum einen die Teilblechpakete voneinander beabstanden, radiale Kühlkanäle innerhalb des Blechpakets des Statorsegments und damit des Stators bilden, als auch als Haltevorrichtung für die amagnetischen Spulenklammern zur Fixierung der Spulenseiten an der Nutseitenwand der offenen Nut dienen.

Die erfindungsgemäße Befestigung der Spulenaußenseiten in einer offenen Nut eignet sich für Statorsegmente von rotatorischen Statoren als auch für Statorsegmente von linear aufgebauten Statoren.

Die Abstandshalter sind in ihrer radialen Ausdehnung maximal so hoch wie der Jochrücken und die radiale Zahnhöhe zusammen. Im Normalfall werden die Abstandshalter in den Bereich des Jochrückens ragen und auch nicht die maximale Zahnhöhe einnehmen.

Die Fixierung der außen liegenden Spulenseite mittels der Spulenklammer erfolgt durch folgende Schritte.

Einhaken des einen Endes der Spulenklammer am ersten Fixationspunkt an einer Kante des Abstandshalters,

Spannen der Spulenklammer bei gleichzeitigem Führen des zweiten Endes der Spulenklammer zum zweiten Fixationspunkt an der Tragstruktur,

Fixieren des zweiten Endes mittels eines Hakens, einer Schraube oder eines Kerbnagels an der Tragstruktur, insbesondere an dem Verbindungselement.

Die Erfindung sowie weitere vorteilhafte Ausgestaltungen der Erfindung werden anhand prinzipiell dargestellter Ausführungsbeispiele näher erläutert. Darin zeigt:
- FIG 1: eine Tragstruktur,
- FIG 2: ein Blechpaket,
- FIG 3: ein Statorsegment ohne Wicklungssystem,
- FIG 4: einen Teilausschnitt eines Statorsegments,
- FIG 5: einen Teilausschnitt eines Statorsegments mit Zahnspule,
- FIG 6: eine perspektivische Darstellung eines Teilausschnitts eines Statorsegments mit Zahnspule,
- FIG 7: einen Teilausschnitt eines Statorsegments mit Zahnspule,
- FIG 8: einen Teilausschnitt eines Statorsegments mit Zahnspule und Spulenklammer,
- FIG 9: eine perspektivische Darstellung eines Teilausschnitts eines Statorsegments mit Zahnspule und Spulenklammer,
- FIG 10: eine prinzipielle Windkraftanlage.

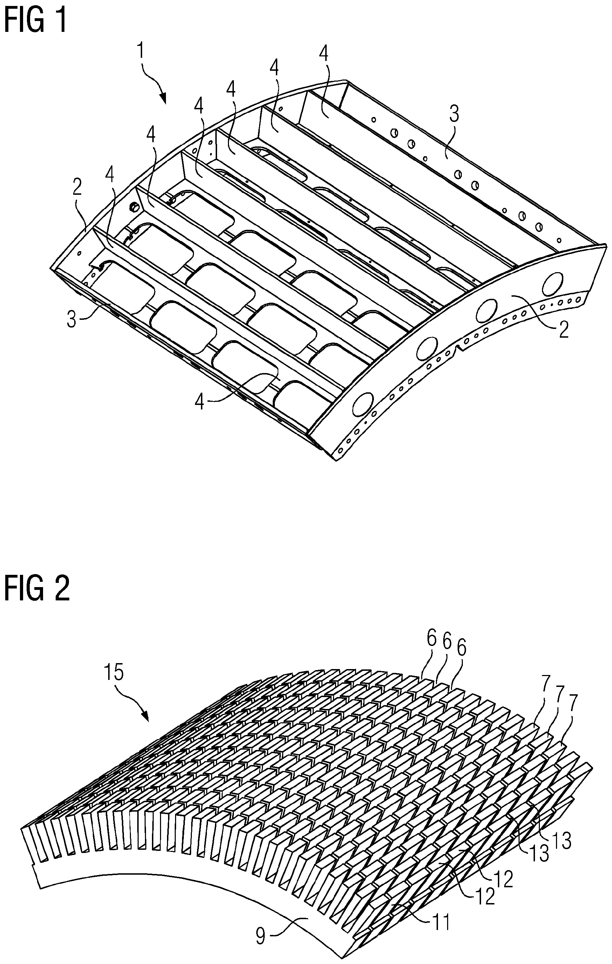

FIG 1 zeigt eine beispielshafte Tragstruktur 1 eines Blechpakets 15 nach FIG 2 eines Statorsegment 5 einer dynamoelektrischen Maschine 21, insbesondere eines Generators mit einem Außenläufer, was darin ersichtlich ist, dass die Nuten 6 dieses Statorsegments 5 stachel- bzw. igelförmig radial nach au-βen stehen und das Statorsegment 5 konvex ausgebildet ist.

Die Tragstruktur 1 weist an den Stirnseiten Druckplatten 2 auf, die an den an den äußeren Rändern durch Verbindungselemente 3 mechanisch verbunden sind. Zusätzliche Versteifungselemente 4 stabilisieren die Tragstruktur 1. Die Druckplatten 2 können zusätzlich radial ausgerichtete Druckfinger im Bereich der Zähne 7 des Blechpaketes 15 aufweisen, um den axialen Druck zu erhöhen.

FIG 2 zeigt das Blechpaket 15 des Statorsegments 5, das in diesem Fall in axialer Richtung aus einzelnen Teilblechpaketen 12 aufgebaut ist, die durch Abstandshalter 8 voneinander beabstandet sind. Jedes Teilblechpaket 12 weist eine vorgegebene Anzahl von Blechen 11 auf. Diese Paketierung des Statorsegments 5 erleichtert im Einsatzfall des Statorsegments 5 bzw. des zusammengesetzten Stators 24 in einer Windkraftanlage 20 eines Generators, eine radiale Kühlung des Stators 24.

In Nuten 6 des Statorsegments 5 werden Formspulen, insbesondere Zahnspulen 16 eingesetzt, die jeweils einen Zahn 7 oder mehrere Zähne umfassen. Die Zähne 7 eines Blechs 11 sind durch einen Jochrücken 9 einstückig verbunden.

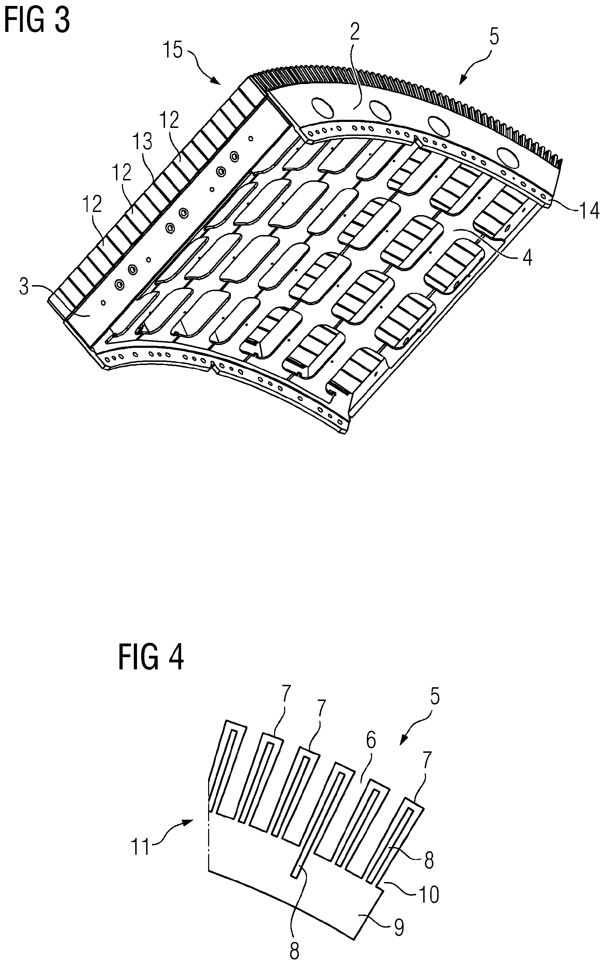

FIG 3 zeigt ein Statorsegment 5 ohne Wicklungssystem. Dabei ist das Blechpaket 15 auf der Tragstruktur 1 angeordnet. Die Druckplatten 2 drücken das Blechpaket 15 mit den Teilblechpaketen 12 und den Abstandhaltern 8 axial zusammen. Die Verbindungselemente 3 und die Versteifungselemente 4 stabilisieren und fixieren die gesamte Struktur des Statorsegments 5.

FIG 4 zeigt eine Detailansicht eines Randbezirks eines Statorsegments 5 mit seinen radial nach außen weisenden Zähnen 7, den Nuten 6 und den angedeuteten Abstandshaltern 8 zwischen den Teilblechpaketen 12. Die Abstandshalter 8 sind in dieser Darstellung in ihrer Breite wesentlich geringer ausgeführt als die Breite eines Zahnes 7. Diese Ausgestaltung bildet, in radialer Richtung betrachtet, Kühlkanäle des Statorsegments 5 mit vergleichsweise großem Querschnitt. Der Abstandshalter 8 erstreckt sich in radialer Richtung bis zu dem Jochrücken 9 oder aus mechanischen Gründen bis in den Jochrücken 9 des Blechpakets 15 des Statorsegments 5, wie dies beispielhaft gezeigt ist.

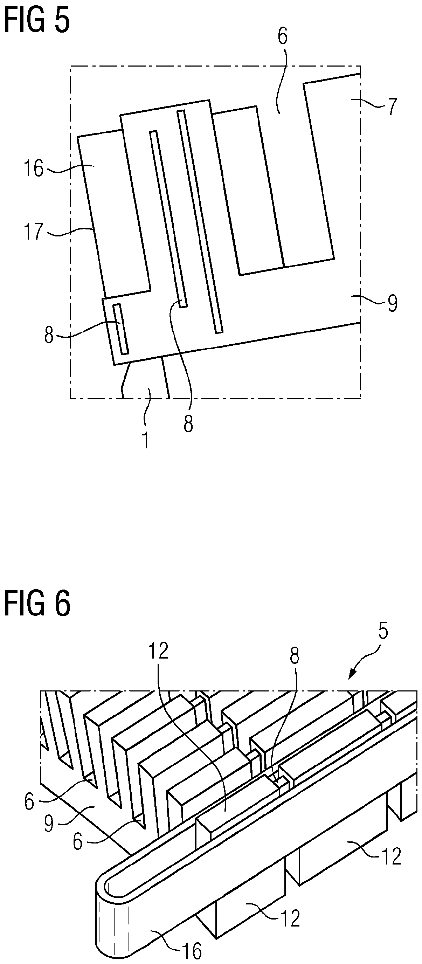

Die Abstandshalter 8 sind in ihrer radialen Ausdehnung maximal so hoch wie der Jochrücken 9 und die radiale Zahnhöhe zusammen. Im Normalfall werden die Abstandshalter 8 in den Bereich des Jochrückens 9 ragen und auch nicht die maximale Zahnhöhe einnehmen, wie dies beispielhaft an einem Zahn 3 der FIG 5 gezeigt ist.

Pro Zahn 7 können dabei auch zwei oder mehrere parallele Abstandshalter 8 unterschiedlicher radialer Länge vorgesehen sein.

An dem äußeren Rand des Blechpaketes 15 bzw. des Statorsegments 5 befindet sich somit nur ein Teil einer Nut 6, die als offene Nut 10 bezeichnet wird, in die ein Spulenschenkel bzw. eine Spulenseite 17 einer Zahnspule 16 oder einer anderen Formspule positioniert wird. Eine Nut 6 setzt sich aus Nutseitenwänden und einem Nutgrund zusammen. Als offene Nut 10 wird demnach eine Nut bezeichnet, die nur eine Nutseitenwand und zumindest einen Teil des Nutgrundes aufweist.

Die Nuten 6, 10 sind dabei im Wesentlichen parallel zu einer Achse 22 eines Stators 24 ausgerichtet.

Damit würde sich die außenliegende Spulenseite 17 in der offenen Nut 10 im weiteren Fertigungsprozess oder gar bei der Montage der Statorsegmente 5 zu einem Stator 24 gegebenenfalls vom Zahn 7 wegbewegen. Dies würde ggf. die Isolierung der äußeren Spulenseite 17 beschädigen.

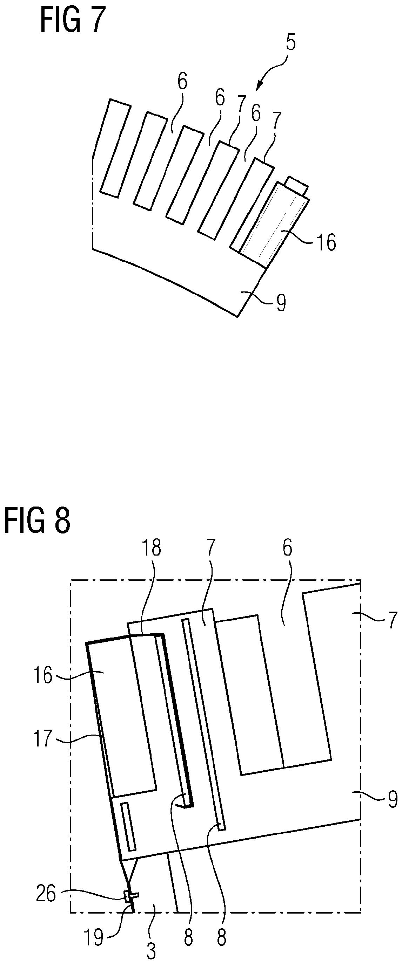

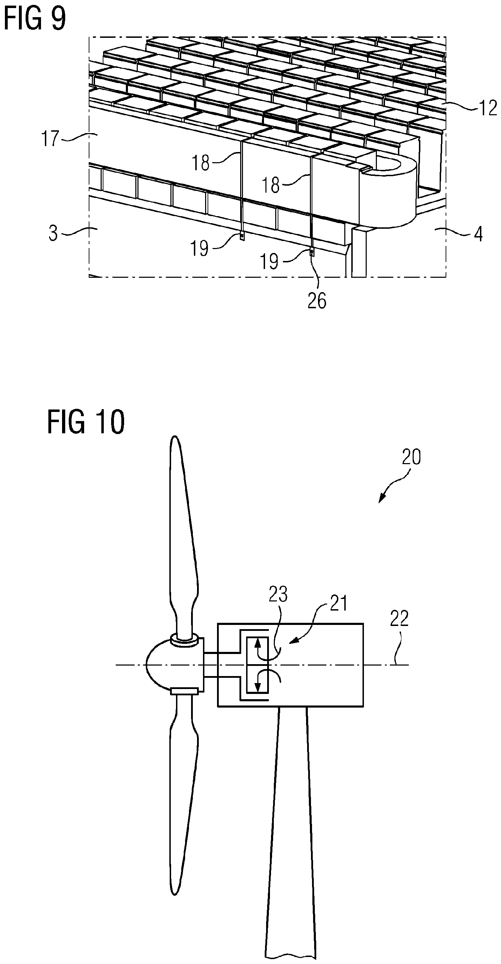

Um nunmehr eine Positioniergenauigkeit und Fixierung dieses Spulenschenkels bzw. Spulenseite 17 einer Formspule oder Zahnspule 16 in der offenen Nut 10 wie in FIG 5 dargestellt zu erhalten, wird, wie in FIG5, FIG 6 und FIG 7 dargestellt, gemäß FIG 8 und FIG 9 an den Abstandshaltern 5, die sich in dem Spalt 13, also dem axialen Abstand zwischen den Teilblechpakete 12 erstrecken, eine Spulenklammer 18 vorgesehen. Die Spulenklammer 18 wird um den in der offenen Nut 13 befindlichen außenliegenden Spulenschenkel 10 einer Zahnspule 4 gespannt.

Damit wird die außenliegende Spulenseite 17 mittels der amagnetischen Spulenklammer 18 am Abstandshalter 8 unter Vorspannung fixiert. Die amagnetische Spulenklammer 18 zieht somit die außenliegende Spulenseite 17 an die Nutseitenwand der offenen Nut 10. Der Abstandshalter 8 ist wiederum zwischen die Teilblechpakete 9 eingekeilt und dort durch den axialen Druck der Druckplatten 2 fixiert. Damit erleichtert sich auch im Fertigungsprozess die Imprägnierung, da eine "sich bewegbare außenliegenden Spulenseite 17" vermieden wird.

Die Spulenklammer 18 wird dabei so angebracht, dass über das eine Ende der Spulenklammer 18 eine erste Fixierungsstelle 25 an dem Abstandshalter 8 beispielsweise über einen Haken vorgenommen wird. Danach wird unter Vorspannung der Spulenklammer 18 das andere Ende der Spulenklammer 18 an der Fixierungsstelle 19 an dem Verbindungselement 3 befestigt. Dies geschieht mittels einer Schraube 26 oder einem Kerbnagel.

Eine derartige amagnetische Spulenklammer 18 ist bei den beschriebenen Statorsegmenten 5 in einer oder mehreren Spalten 13 zur Fixierung der Spulenseite 17 gemäß FIG 9 vorgesehen. Auf die axiale Länge eines Statorsegments 5 betrachtet befinden sich beispielsweise nur in einer Spalte 13 oder in jeder Spalte 13 oder an jeder zweiten Spalte 13 eine Spulenklammer 18. Die in der Spalte 13 angeordneten Abstandshalter 8 bilden die erste Fixierung der Spulenklammer 18.

FIG 5 bis FIG 9 zeigt jeweils eine Ansicht eines Statorsegments 5, bei dem eine Zahnspule 16 auf dem letzten, also äu-βeren Zahn 7 angeordnet ist. Das Wicklungssystem dieses Statorsegments 5 kann dadurch so aufgebaut werden, dass um jeden Zahn 7 eine Zahnspule 16 vorgesehen ist. Das bedeutet, dass in jeder Nut 6 unterschiedliche Spulenseiten 17 unterschiedlicher Spulen 16 vorhanden sind.

Jede der Spulen - Formspule oder Zahnspule - ist dabei entweder massiv ausgebildet oder aus Teilleitern (wie z.B. gemäß FIG 9) gewickelt.

Jede in einer offenen Nut 10 befindliche Spulenseite 17 wird durch einen oder mehrere vorzugsweise axial verteilt angeordnete Spulenklammern 18 am äußeren Zahn bzw. an der Nutseitenwand der offenen Nut 10 im Bereich der Abstandshalter 5 fixiert.

Eine derartige Anordnung von Statorsegmenten 5 wird bei Statoren 24 bevorzugt, die für große Leistungen und/oder Direktantriebe, insbesondere bei Windkraftanlagen 20 gemäß FIG 10 oder Rohrmühlen vorgesehen sind. Ein Rotor dreht dabei um eine Achse 22, wobei die Nuten 6 des Statorsegments 5 und des Stators 24 im Wesentlichen achsparallel ausgerichtet sind.

Dabei kann ein Lüfter oder mehrere Lüfter einen Kühlstrom 23 erzeugen, der zumindest den Generator und/oder Umrichterkomponenten, insbesondere den Stator 24 u.a. über die durch die Abstandshalter 8 generierten radialen Kühlkanäle bzw. Spalte 13 im Statorsegment 5 kühlt.

## Patentansprüche

1. Statorsegment (5) eines Stators (24) einer dynamoelektrischen Maschine (21) mit
- axial hintereinander angeordneten genuteten Blechen (11), so dass im Wesentlichen axial verlaufende Nuten (6) eines Blechpakets (15) gebildet sind,
- in den Nuten (6) angeordnete Spulen (16), wobei in einer Nut (6) eine Spulenseite (17) oder zwei Spulenseiten (17) unterschiedlicher Spulen (16) angeordnet sind,
- wobei die Bleche (11) an ihren nutparallelen äußeren Begrenzungsseiten zumindest eine offene Nut (10) aufweisen,
- wobei die Spulenseiten (17) in den offenen Nuten (10) durch amagnetische Befestigungsmittel fixiert sind, und
- wobei nach einer vorgebbaren Anzahl von Blechen (11) in axialer Richtung Abstandshalter (8) in einer Spalte (13) vorgesehen sind, so dass in axialer Richtung betrachtet zwei oder mehrere Teilblechpakete (12) des Statorsegments (5) vorhanden sind,
**dadurch gekennzeichnet, dass** das Blechpaket (15) auf einer Tragstruktur (1) angeordnet ist, die Druckplatten (2), Verbindungselemente (3) und Versteifungselemente (4) aufweist, und dass das amagnetische Befestigungsmittel als Spulenklammer (18) ausgebildet ist, deren eines Ende an einer ersten Fixierungsstelle (25), insbesondere einem Abstandshalter (8) und deren anderes Ende an einer zweiten Fixierungsstelle (19) an der Tragstruktur (1), insbesondere an dem Verbindungselement (3), unter Vorspannung befestigbar ist.

2. Statorsegment (5) nach Anspruch 1, **dadurch gekennzeichnet, dass** die amagnetischen Spulenklammern (18) im Bereich der axial voneinander beabstandeten Teilblechpakete (12) in den Spalten (13) an einem Abstandshalter (8) mit der ersten Fixationsstelle (25) angeordnet sind, wobei die zweite Fixationsstelle (19) an dem nächst liegenden Verbindungselement (3) auf axial gleicher Höhe vorgesehen ist.

3. Statorsegment (5) nach Anspruch 2, **dadurch gekennzeichnet, dass** die erste Fixationsstelle (25) einen Haken an einem Ende der Spulenklammer (18) aufweist und die zweite Fixationsstelle (19) der Spulenklammer (18) an dem Verbindungselement (3) mittels eines Hakens, oder Schraube oder Kerbnagel realisiert ist.

4. Stator (24) mit Statorsegmenten (5) nach einem der vorhergehenden Ansprüche, **dadurch gekennzeichnet**, n e t , dass die sich einander zugewandten offenen Nuten (10) zweier Statorsegmente (5) nur mit einer Spulenseite (17) eines Statorsegments (1) oder zwei Spulenseiten (17) unterschiedlicher aber benachbarter Statorsegmente (5) versehen sind, wobei die Statorsegmente (5) in Umfangsrichtung betrachtet über die jeweiligen einander zugewandten Verbindungelementen (3) der Tragstruktur (1) miteinander mechanisch verbindbar sind.

5. Dynamoelektrische Maschine (21), insbesondere Generator einer Windkraftanlage (20), mit einem Stator (24) nach Anspruch 4, **dadurch gekennzeichnet, dass** ein Kühlsystem, insbesondere Lüfter vorgesehen ist, durch das in die vorhandenen Spalte (13) zwischen den Teilblechpaketen (12) Kühlluft förderbar ist.

## Claims

1. Stator segment (5) of a stator (24) of a dynamoelectric machine (21) having
- slotted laminations (11) arranged axially behind one another, such that substantially axially extending slots (6) of a laminated core (15) are formed,
- coils (16) arranged in the slots (6), wherein one coil side (17) or two coil sides (17) of different coils (16) are arranged in a slot (6),
- wherein the laminations (11) have at least one open slot (10) on their slot-parallel outer boundary sides,
- wherein the coil sides (17) are fixed in the open slots (10) by non-magnetic fastening means, and
- wherein, after a predeterminable number of laminations (11) in the axial direction, spacers (8) are provided in a gap (13), such that, as viewed in the axial direction, two or more partial laminated cores (12) of the stator segment (5) are present,
**characterized in that** the laminated core (15) is arranged on a supporting structure (1) which has pressure plates (2), connecting elements (3) and stiffening elements (4), and **in that** the non-magnetic fastening means takes the form of a coil clamp (18) whose one end can be fastened with pretensioning at a first fixing point (25), in particular a spacer (8), and whose other end can be fastened with pretensioning at a second fixing point (19) on the supporting structure (1), in particular on the connecting element (3).

2. Stator segment (5) according to Claim 1, **characterized in that** the non-magnetic coil clamps (18) are arranged, in the region of the partial laminated cores (12) which are axially spaced apart from one another, in the gaps (13) on a spacer (8) having the first fastening point (25), wherein the second fastening point (19) is provided on the next connecting element (3) at axially the same height.

3. Stator segment (5) according to Claim 2, **characterized in that** the first fixing point (25) has a hook at one end of the coil clamp (18), and the second fixing point (19) of the coil clamp (18) on the connecting element (3) is realized by means of a hook, or screw or notched nail.

4. Stator (24) having stator segments (5) according to one of the preceding claims, **characterized in that** the mutually facing open slots (10) of two stator segments (5) are provided only with one coil side (17) of a stator segment (1) or two coil sides (17) of different, but adjacent stator segments (5), wherein, as viewed in the circumferential direction, the stator segments (5) can be mechanically connected to one another via the respective mutually facing connecting elements (3) of the supporting structure (1).

5. Dynamoelectric machine (21), in particular a generator of a wind turbine (20), having a stator (24) according to Claim 4, **characterized in that** there is provided a cooling system, in particular a fan, by means of which cooling air can be conveyed into the gaps (13) present between the partial laminated cores (12).

## Revendications

1. Segment de stator (5) d'un stator (24) d'une machine dynamoélectrique (21) avec
- des tôles rainurées (11) agencées axialement les unes derrière les autres, de telle sorte que des rainures (6) s'étendant essentiellement axialement d'un paquet de tôles (15) sont formées,
- des bobines (16) agencées dans les rainures (6), un côté de bobine (17) ou deux côtés de bobine (17) de bobines (16) différentes étant agencés dans une rainure (6),
- les tôles (11) présentant au moins une rainure ouverte (10) sur leurs côtés de délimitation extérieurs parallèles à la rainure,
- les côtés de bobine (17) étant fixés dans les rainures ouvertes (10) par des moyens de fixation amagnétiques, et
- des espaceurs (8) étant prévus dans une fente (13) après un nombre prédéfinissable de tôles (11) dans la direction axiale, de telle sorte que, considéré dans la direction axiale, deux paquets de tôles partiels (12) ou plus du segment de stator (5) sont présents,
**caractérisé en ce que** le paquet de tôles (15) est agencé sur une structure porteuse (1) qui présente des plaques de pression (2), des éléments de liaison (3) et des éléments de renforcement (4), et **en ce que** le moyen de fixation amagnétique est configuré sous forme de pince à bobine (18) dont une extrémité peut être fixée sous précontrainte à un premier point de fixation (25), notamment à un espaceur (8), et l'autre extrémité à un deuxième point de fixation (19) sur la structure porteuse (1), notamment sur l'élément de liaison (3).

2. Segment de stator (5) selon la revendication 1, **caractérisé en ce que** les pinces à bobine amagnétiques (18) sont agencées dans la zone des paquets de tôles partiels (12) espacés axialement les uns des autres dans les fentes (13) sur un espaceur (8) avec le premier point de fixation (25), le deuxième point de fixation (19) étant prévu sur l'élément de liaison (3) suivant à la même hauteur axiale.

3. Segment de stator (5) selon la revendication 2, **caractérisé en ce que** le premier point de fixation (25) présente un crochet à une extrémité de la pince à bobine (18) et le deuxième point de fixation (19) de la pince à bobine (18) est réalisé sur l'élément de liaison (3) au moyen d'un crochet, ou d'une vis ou d'un clou cannelé.

4. Stator (24) avec des segments de stator (5) selon l'une quelconque des revendications précédentes, **caractérisé en ce que** les rainures ouvertes (10) de deux segments de stator (5), qui sont tournées l'une vers l'autre, sont pourvues d'un seul côté de bobine (17) d'un segment de stator (1) ou de deux côtés de bobine (17) de segments de stator (5) différents mais voisins, les segments de stator (5) pouvant être reliés mécaniquement entre eux dans la direction circonférentielle par l'intermédiaire des éléments de liaison (3) de la structure porteuse (1) qui sont tournés les uns vers les autres.

5. Machine dynamoélectrique (21), notamment générateur d'une éolienne (20), avec un stator (24) selon la revendication 4, **caractérisée en ce qu'**un système de refroidissement est prévu, notamment un ventilateur, par lequel de l'air de refroidissement peut être transporté dans les fentes (13) présentes entre les paquets de tôles partiels (12).
